# EUROPÄISCHE PATENTSCHRIFT

(11) **EP 1 900 090 B1**
(45) Veröffentlichungstag und Bekanntmachung des Hinweises auf die Patenterteilung: **18.11.2009**
(21) Anmeldenummer: 06753922.1
(22) Anmeldetag: 26.05.2006
(51) Int. Cl.: H02P 3/04

(54) **VORRICHTUNG, ELEKTROMOTOR UND VERFAHREN ZUR PRÜFUNG UND/ODER ÜBERWACHUNG EINER ELEKTROMAGNETISCH BETÄTIGBAREN BREMSE**
DEVICE, ELECTRIC MOTOR AND METHOD FOR TESTING AND/OR MONITORING AN ELECTROMAGNETICALLY ACTUATED BRAKE
DISPOSITIF, MOTEUR ÉLECTRIQUE ET PROCÉDÉ POUR CONTRÔLER ET/OU SURVEILLER UN FREIN À ACTIONNEMENT ÉLECTROMAGNÉTIQUE

(30) Priorität: 27.06.2005 DE 102005030085
(43) Veröffentlichungstag der Anmeldung: 19.03.2008
(73) Patentinhaber: SEW-EURODRIVE GmbH & Co. KG, 76646 Bruchsal (DE)
(72) Erfinder: BÖCKLE, Jürgen, 76646 Bruchsal (DE); GROSS, Dieter, 68753 Waghäusel (DE); KRATTENMACHER, Hans, 75015 Bretten (DE)
(86) Internationale Anmeldenummer: PCT/EP2006/005066
(87) Internationale Veröffentlichungsnummer: WO 2007/000220

(56) Entgegenhaltungen:
- EP-A- 1 298 771
- DE-C1- 19 746 027

## Beschreibung

Die Erfindung betrifft eine Vorrichtung, einen Elektromotor und ein Verfahren zur Prüfung und/oder Überwachung einer elektromagnetisch betätigbaren Bremse.

Aus der DE 36 13 294 C2 ist eine Bremsspule für eine elektromagnetisch betätigbare Bremse bekannt, die einen Mittelabgriff aufweist, also geteilt aufgebaut ist. Somit ist beim ersten Bestromen ein erhöhtes Magnetfeld erzeugbar, um ein beschleunigtes Einfallen der Bremse vorzusehen. Nach einer vorgebbaren Zeitspanne wird in einen Haltebetrieb mit entsprechendem Haltestrom gewechselt.

DE 197 40 016 C2 ist ein Weitspannungsgleichrichter bekannt, der an einem weiten Bereich von eingangsseitigen Wechselspannungen betreibbar ist.

Aus der EP 1 298 711 A2 ist eine Steuereinrichtung bekannt, die gemäß der dortigen Figur 4 und zugehörigen Beschreibung und Zusammenfassung dazu dient, die Temperatur und die Leistung eines dreiphasig betriebenen Motors zu überwachen. Hierzu werden Motorstrom und vermutlich auch Motorspannung bestimmt und daraus die Motorleistung berechnet. Eine Bremse ist mit dem Motor In Wirkverbindung vorgesehen, wird aber in keiner Welse überwacht.

Der Erfindung liegt daher die Aufgabe zugrunde, die Sicherheit zu erhöhen und insbesondere die Fehlerhäufigkeit zu verkleinern, insbesondere bei industriellen Anlagen.

Erfindungsgemäß wird die Aufgabe bei der Vorrichtung nach den in Anspruch 1, bei dem Elektromotor nach den in Anspruch 21 und bei dem Verfahren nach den in Anspruch 22 angegebenen Merkmalen gelöst.

Wichtige Merkmale der Erfindung bei der Vorrichtung sind, dass sie zumindest eine elektronische Schaltung umfasst, und für eine mit Gleichspannung versorgte Bremsspule einer elektromagnetisch betätigbaren Bremse vorgesehen ist,
wobei die Gleichspannung von einem Gleichrichter erzeugt ist, der aus einer Wechselspannung versorgt ist,
wobei die elektronische Schaltung ebenfalls aus der Wechselspannung versorgbar ist,
wobei die elektronische Schaltung Mittel zur Erfassung von mindestens einer an der Spule anliegenden Spannung aufweist,
wobei die elektronische Schaltung Mittel zum Vergleichen der erfassten Spannungswerte mit Referenzwerten umfasst,
insbesondere wobei das Ergebnis des Vergleichens nach außen oder an weitere Komponenten signalisiert wird.

Von Vorteil ist dabei, dass die Funktion des Gleichrichters und die Korrektheit der Anschlüsse erfassbar ist. Es ist also eine Diagnose der Gleichrichterfunktion ausgeführt. Unter Gleichrichter ist in der vorliegenden Beschreibung eine Schaltung zu verstehen, die zumindest aus einer Wechselspannung zumindest eine Gleichspannung zur Verfügung stellen kann. Darüber hinaus können aber auch weitere elektronische Bauelemente in dieser Schaltung integriert sein. Beispielsweise sind steuerbare Halbleiterschalter, wie IGBT und/oder Thyristoren, umfasst und deren Ansteuerschaltung. Somit ist unter dem hier verwendeten Begriff "Gleichrichter" nicht nur eine Schaltung erfasst, die eine bloße Gleichrichtung ausführt, sondern auch Schaltungen, die komplexer sind und größere Funktionalität aufweisen. Wie nachfolgend noch näher erläutert, sind insbesondere auch Schaltungen von dem Begriff "Gleichrichter" umfasst, die für eine erste Zeitspanne eine erste Spannung an einem ersten Ausgang zur Verfügung stellen und nachfolgend eine andere unipolare Spannung, also Gleichspannung, an einem zweiten Ausgang. Dabei kann der erste Ausgang mit dem Mittelabgriff und einem der Endabgriffe einer Bremsspule verbunden sein, der zweite Ausgang nur mit den Endabgriffen dieser Spule.

Bei einer vorteilhaften Ausgestaltung weist die erfasste, an der Spule anliegende Spannung zwischen einem Mittelabgriff der Spule und einem Endabgriff der Spule vorgesehen ist. Von Vorteil ist dabei, dass eine Schnellerregung durch kurzzeitigen Überstrom in einem Spulenwicklungsteil ausführbar ist und somit ein schnelleres Lüften der Bremse ausführbar ist. Denn bei der Bremse wird mittels der durch die Bestromung der Bremsspule bewirkten Anziehungskraft auf eine Ankerscheibe diese axial bewegt, wobei eine Federkraft überwunden wird, wenn die Anziehungskraft größer ist als die Federkraft. Durch die kurzzeitige Bestromung des Spulewicklungsteils zwischen Mittelabgriff und Endabgriff, also einer kleineren Induktivität als die Induktivität der gesamten Bremsspule, ist ein schnellerer Anstieg des Stromes ermöglicht. Dadurch wird auch das Magnetfeld schneller aufgebaut und die Anziehungskraft schneller erhöht. Nach dieser kurzen Zeitspanne wird die gesamte Spule mit einem Haltestrom bestromt, der die zulässigen Werte nicht überschreitet und derart bemessen ist, dass die Anziehungskraft größer als die Federkraft ist. Bei Nichtbestromung fällt die Bremse wieder ab.

Bei einer alternativen vorteilhaften Ausgestaltung ist eine erste erfasste, an der Spule anliegende Spannung zwischen einem Mittelabgriff der Spule und einem Endabgriff der Spule vorgesehen und
eine zweite erfasste, an der Spule anliegende Spannung ist zwischen einem Mittelabgriff. der Spule und dem anderen Endabgriff der Spule vorgesehen. Von Vorteil ist dabei, dass eine absolute Kontrolle der Spannungen an der Bremsspule ausführbar ist.

Bei einer vorteilhaften Ausgestaltung werden die Spannungswerte vor dem Vergleichen Mitteln zur Filterung und nachfolgender Glättung zugeführt. Von Vorteil ist dabei, dass der Vergleich genauer und verbessert ausführbar ist.

Bei einer vorteilhaften Ausgestaltung ist die Wechselspannung einphasig oder mehrphasig.

Von Vorteil ist dabei, dass verschiedene Arten von Wechselspannung verwendbar sind,
wobei bei der einphasigen Wechselspannung der Aufwand an elektronischen Bauteilen und herzustellenden Verbindungen geringer und kostengünstiger ist.

Bei einer vorteilhaften Ausgestaltung weist die Bremsspulenwicklung einen Mittelabgriff auf. Von Vorteil ist dabei, dass ein beschleunigtes Einfallens der Bremse erreichbar ist.

Bei einer vorteilhaften Ausgestaltung sind die Referenzwerte mittels Spannungsteilung der Wechselspannung und nachfolgender Glättung der gleichgerichteten Spannung erzeugt. Von Vorteil ist dabei, dass die Schaltung für einen weiten Bereih von Eingangs-Wechselspannungen betreibbar ist. Denn die so gewonnenen Referenzwerte sind proportional zur Eingangs-Wechselspannung. Ebenso sind aber auch die an der Bremsspule zu messenden Spannungen oder wahlweise die Spannung zwischen Mittelabgriff und Endabgriff proportional zur Eingangsspannung, weil die an der Bremsspule anliegend Spannung vom Gleichrichter erzeugt wird, der von der Eingangs-Wechselspannung versorgt ist.

Bei einer vorteilhaften Ausgestaltung erzeugen die Mittel zum Vergleichen ein Signal, das Anzeigemitteln, einem Kontakt, einem Datenbus und/oder einem mechanisch bistabilen Schalter zuführbar ist. Von Vorteil ist dabei, dass nach außen oder an weitere Geräte ein Fehlerzustand, wie Anschlussvertauschung der Bremsspulenanschlüsse, Nicht-Anschluss der Bremsspulenanschlüsse und/oder Versagen des Gleichrichters oder dergleichen, signalisierbar ist. Mit Anzeigemitteln kann der Fehlerzustand am Antrieb selbst oder im Schaltschrank optisch und/oder akustisch angezeigt werden. Mit den weiter genannten Mitteln, wie Kontakt, Datenbus, ist eine Signalisierung an weitere Geräte ermöglicht. Dort ist dann ein entsprechendes Bearbeiten ausführbar.

Bei einer vorteilhaften Ausgestaltung erzeugen die Mittel zum Vergleichen ein Signal, das einem Trennschalter zum Trennen der Spannungsversorgung des Gleichrichters zuführbar ist. Von Vorteil ist dabei, dass im Fehlerfall der Gleichrichter abschaltbar ist und somit die Bremse in den sicheren Zustand gebracht werden kann, nämlich in den eingefallenen zustand. Somit wird dann ein Antrieb, umfassend Elektromotor oder dergleichen, gebremst und still gesetzt. Auf diese Weise ist die Sicherheit erhöht.

Bei einer vorteilhaften Ausgestaltung umfasst der Gleichrichter steuerbare Halbleiterschalter, insbesondere Thyristoren, welche derart ansteuerbar sind, dass beim Einschalten des Gleichrichters in einer ersten Zeitspanne ein erster Wicklungsabschnitt der Bremsspulenwicklung bestrombar ist und danach die gesamte Bremsspulenwicklung bestrombar ist. Von Vorteil ist dabei, dass mit einfachen und kostengünstigen Mitteln eine anfängliche Übererregung realisierbar ist und somit ein schnelleres Lüften der Bremse.

Bei einer vorteilhaften Ausgestaltung ist die elektronische Schaltung im Gehäuse des Gleichrichters integriert ausgeführt ist. Von Vorteil ist dabei, dass kein separates Gehäuse notwendig ist. Außerdem ist die Schaltung auf derselben Leiterplatte wie auch der Bremsgleichrichter ausführbar, wodurch für die Schaltung keine wesentlichen Mehrkosten entstehen.

Bei einer anderen vorteilhaften Ausgestaltung ist die elektronische Schaltung im Anschlusskasten eines Elektromotors vorgesehen, insbesondere eines Elektromotors mit Bremse. Von Vorteil ist dabei, dass das Gehäuse des Anschlusskastens gehäusebildende Funktion auch für die Schaltung aufweist und somit die Schaltung kein aufwendiges Gehäuse erhalten muss.
Bei einer anderen vorteilhaften Ausgestaltung ist die elektronische Schaltung in einer Ausnehmung des Gehäuses des Anschlusskastens eines Elektromotors einschraubbar und/oder vorgesehen, insbesondere eines Elektromotors mit Bremse. Von Vorteil ist dabei, dass eine Kabelverschraubung verwendbar ist und somit die Anzeigemittel der Schaltung von außen sichtbar sind.

Bei einer anderen vorteilhaften Ausgestaltung ist die elektronische Schaltung in einem Schaltschrank einer Anlage vorgesehen. Von Vorteil ist dabei, dass sie neben oder mit dem Gleichrichter vorgesehen ist und somit auch in räumlicher Nähe desselben positionierbar ist. Die angezeigten Informationen sind somit sofort beziehbar auf den Gleichrichter.

Bei einer anderen vorteilhaften Ausgestaltung weist die elektronische Schaltung ein Gehäuse auf, mit dem Sie auf den Gleichrichter aufsteckbar oder zwischen den Gleichrichter und dessen zugehörigen Anschlussleitungen zwischensteckbar vorgesehen ist. Von Vorteil ist dabei, dass beim Aufstecken ein Prüfgerät geschaffen ist, das auch für weitere Gleichrichter verwendbar ist, insbesondere bei einer Installation oder Routineprüfung.

Bei einer anderen vorteilhaften Ausgestaltung weist die elektronische Schaltung ein Gehäuse auf und ist an den Gleichrichter derart andrückbar, dass mittels Kontaktstiften und/oder Prüfspitzen elektrischer Kontakt zu den elektrischen Anschlussvorrichtungen des Gleichrichters herstellbar ist zur Anschlussprüfung der Verdrahtung des Gleichrichters mit der Bremse und/oder zur Funktionsdiagnose des Gleichrichters. Von Vorteil ist dabei, dass die Schaltung schnell und einfach kontaktierbar ist an dem Gleichrichter und für die Prüfung vieler Gleichrichter in kurzer Zeit verwendbar ist.

Bei einer anderen vorteilhaften Ausgestaltung weist die elektronische Schaltung ein Gehäuse mit derartig ausgeführten Steckverbinderteilen auf, dass der Gleichrichter auf das Gehäuse aufsteckbar und das Gehäuse auf einen im Schaltschrank vorgesehenen Gegensteckverbinder aufsteckbar ist. Von Vorteil ist dabei, dass bei bestehenden anlagen, die einen Bremsmotor und zugehörigen Gleichrichter aufweisen ein Nachrüsten mit der Schaltung schnell und einfach vorsehbar ist, wobei nur der Gleichrichter gelöst werden muss, statt des Gleichrichters die elektronische Schaltung verbunden werden muss und zuletzt der Gleichrichter mit der elektronischen Schaltung verbunden werden muss.

Bei einer anderen vorteilhaften Ausgestaltung umfasst die elektronische Schaltung durchgeschleifte, den Gleichrichter mit Wechselspannung versorgende Leitungen und durchgeschleifte, die Bremsspule versorgende Leitungen. Insbesondere weist die elektronische Schaltung ein Gehäuse mit derartig ausgeführten Steckverbinderteilen auf, dass der Gleichrichter auf das Gehäuse derart aufsteckbar und das Gehäuse auf einen im Schaltschrank vorgesehenen Gegensteckverbinder derart aufsteckbar ist, dass elektrische Leitungen des Gleichrichters durchgeschleift sind durch das Gehäuse zu dem Gegensteckverbinder. Von Vorteil ist dabei, dass die Überprüfungs- und Diagnosefunktion der Schaltung den Gleichrichterbetrieb nicht beeinflusst, solange keine Fehlfunktion auftritt.

Wesentliche Merkmale bei dem Elektromotor sind, dass der Elektromotor eine elektromagnetisch betätigbare Bremse umfasst, die aus einem Gleichrichter versorgt ist, der im Anschlusskasten des Elektromotors vorgesehen ist, wobei eine elektronische Schaltung zur Anschlussprüfung der Bremsspule und/oder Überwachung der Funktion des Gleichrichters vorgesehen ist. Von Vorteil ist dabei, dass schon bei Installation die Korrektheit der Anschlüsse geprüft ist und im Fehlerfall ein Anzeigen dieser Information ausführbar ist. Somit ist die Sicherheit bei der Installation erhöhbar. Auch später während des Betriebs des Antriebs, umfassend Elektromotor mit der Bremse, wird die Funktion überwacht, insbesondere die Funktion des Gleichrichters. Ein Versagen ist somit signalisierbar.

Wesentliche Merkmale bei dem Verfahren sind, dass es zur Prüfung und/oder Überwachung einer elektromagnetisch betätigbaren Bremse, deren Bremsspule mit Gleichspannung versorgt wird, vorgesehen ist,
wobei die Gleichspannung von einem Gleichrichter erzeugt wird, der aus einer Wechselspannung versorgt wird,
wobei mindestens eine an der Spule anliegende Spannung erfasst und mit Referenzwerten vergleichen wird.

Von Vorteil ist dabei, dass Ergebnis des Vergleichens nach außen oder an weitere Komponenten signalisierbar ist und somit eine Anschlussüberprüfung der Anschlüsse der Bremsspule und eine Diagnose und/oder Überwachung der Funktion des Gleichrichters ausführbar ist.
Weitere Vorteile ergeben sich aus den Unteransprüchen.

### Bezugszeichenliste

- 1: Gerät
- 2: Steckverbinder
- 3: Steckverbinder
- 4: Anzeigemittel
- 5: elektrischer Anschluss

- 30: Vergleicher mit Spannungserfassung
- 31: Anzeigemittel

- A: Spannungsversorgung
- B: Spannungserfassung und -Vergleich
- C: Anzeigemittel
- D: Verzögerungs- und Ansteuerschaltungsteil
- E: Schalter, mechanisch bistabil
- F: Trennschalter

### Die Erfindung wird nun anhand von Abbildungen näher erläutert:

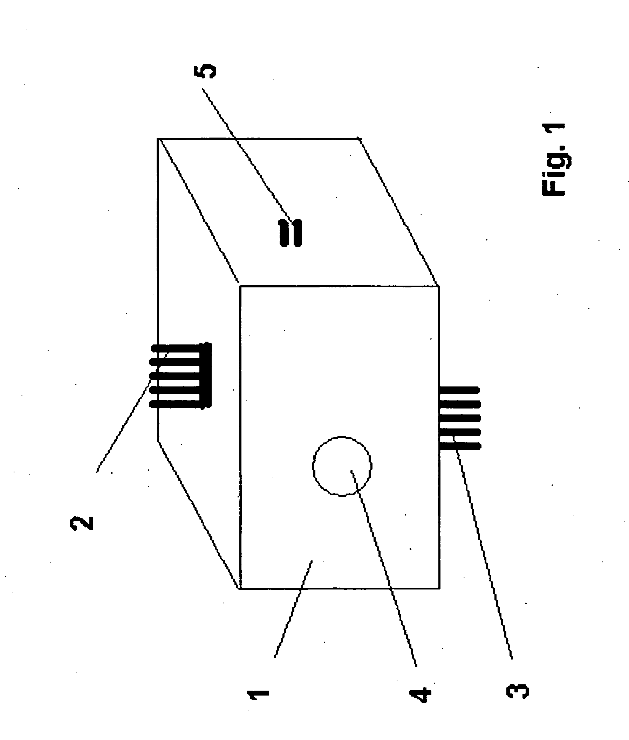

In der Figur 1 ist das Gerät 1 als eine erfindungsgemäße Vorrichtung symbolisch gezeigt. Das Gerät ist zweiteilig aufgebaut, also zumindest mit einem Deckel versehen. In seinem Inneren ist eine elektronische Schaltung vorgesehen.
An einer ersten Seite ist ein Steckverbinder 2 zum Verbinden mit dem Gleichrichter vorgesehen. An der gegenüberliegenden ist ein Steckverbinder 3 zum Verbinden mit der Bremsspule vorgesehen, die einen Mittelabgriff aufweist, also drei Anschlüsse.

Die elektronische Schaltung überwacht, ob die Bremsspule richtig angeschlossen ist, also die Anschlüsse nicht vertauscht sind, und ob der Gleichrichter korrekt funktioniert, also wie vorgesehen angeschlossen ist und arbeitet.

Bei Detektion eines Fehlers, wie zumindest Verpolung, falsches Anschließen, Versagen des Gleichrichters oder dergleichen, wird mittels der Anzeigemittel 4 der Fehlerzustand nach außen signalisiert.

Der elektrische Anschluss 5 ist als Kontakt ausgeführt, an dem der Fehlerzustand gemeldet wird. Dieser kann auch in einem weiteren erfindungsgemäßen Ausführungsbeispiel als Anschluss für einen Datenbus ausgeführt sein. Somit wird mittels des Datenbusses der Fehlerzustand an einen weiteren Busteilnehmer mitteilbar.

Das elektronische Gerät 1 dient also der Anschlussprüfung der Bremsspule und der Diagnose der Gleichrichterfunktion. Es ist mittels der Steckverbinder (2,3) zwischen dem Gleichrichter und den Spulenanschlüssen vorsehbar. Ein Falschanschluss bei der 3-Draht-Bremse, also Bremse mit einer Bremsspule mit Mittelabgriff, ist signalisierbar. Die Bremse ist geschützt gegen einen Defekt im Gleichrichter.

Bei der Erfindung ist auch statt einer Bremsspule mit Mittelabgriff eine einfache Spule mit einem Anfangs- und Endabgriff verwendbar, also eine Spule ohne Mittelabgriff. Dabei ist dann allerdings ein Vertauschen der beiden Spulenanschlüsse unproblematisch. Es wird dann nur überwacht, ob die Anschlüsse angeschlossen sind und ob der Gleichrichter korrekt funktioniert.

Bei dem Gerät nach Figur 1 ist vorteilig, dass es mittels seiner an der Oberseite und Unterseite vorgesehenen Steckverbinder (2,3) zwischen den Gleichrichter und die Spule einbringbar ist. Dies ist insbesondere im Servicefall wichtig. Denn es kann nun ohne großen Aufwand das Gerät 1 zwischengeschaltet werden, insbesondere ohne aufwendige Lötverbindungen oder Kabelverbindungen. Die Sicherheit gegen die genannten Fehler ist erhöht und somit die Fehlerhäufigkeit verkleinert.

Die erfindungsgemäße elektronische Schaltung des Geräts 1 ist aber auch integriert mit dem Gleichrichter als Gerät ausführbar. Somit weist dann der Gleichrichter an seinem Gehäuse die Anzeigemittel zum Signalisieren des Fehlerzustandes auf. Dieses Gleichrichtergerät ist entweder im Schaltschrank vorsehbar oder in einem Anschlusskasten, der auch Klemmenkasten genannt wird, des Elektromotors mit Bremse. Somit ist der Gleichrichter insgesamt geschützt von dem Gehäuse des Anschlusskastens des Elektromotors.

In einem weiteren erfindungsgemäßen Ausführungsbeispiel ist die elektronische Schaltung in einem Gehäuse vorgesehen, das mittels Nadeln und/oder Prüfspitzen auf die metallischen Bereiche der Anschlusspunkte des Gleichrichtergehäuses aufdrückbar und somit dort kontaktierbar. Bei einer Wartung ist somit kein Herstellen von elektrischen Verbindungen notwendig, also kein zusätzlicher Verdrahtungsaufwand. Der Service, insbesondere bei einer Überprüfung der Funktion des Gleichrichters, ist auf diese Weise schneller und kostengünstiger ausführbar. Außerdem ist ein einzelnes Gerät für die Überprüfung vieler Gleichrichter in einer Anlage verwendbar. Bei einer Weiterbildung ist der Schaltkontakt 5 nicht notwendig.

In einem weiteren erfindungsgemäßen Ausführungsbeispiel ist der Gleichrichter samt der elektronischen Schaltung in einem Gehäuse vorgesehen, insbesondere vergossen, das in einer Ausnehmung des Anschlusskastengehäuses des Elektromotors vorsehbar ist. Insbesondere eignet sich hierzu eine Ausnehmung, die zur sogenannten Kabelverschraubung vorgesehen ist. Das Gehäuse ist also auch mit einem Gewinde an seiner Außenseite vorsehbar, das in ein Gegengewinde der Ausnehmung in der Gehäusewand des Klemmenkastens einschraubbar ist. Vorteilig ist dabei, dass der Gleichrichter ständig überwachbar ist, also nicht nur zu den Zeitpunkten der Wartung.

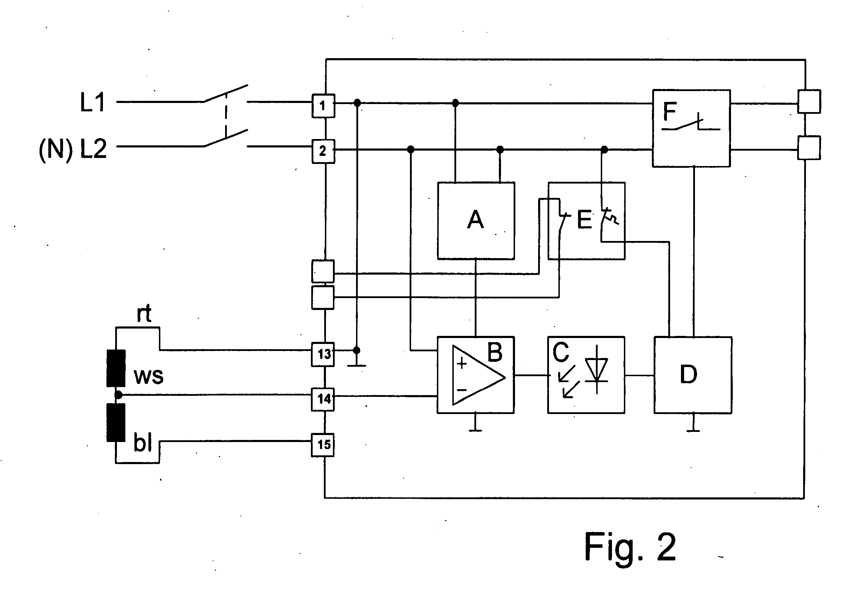

In der Figur 2 ist die erfindungsgemäße elektronische Schaltung beispielhaft gezeigt. Die einphasige Wechselspannung wird bei L1, L2 angelegt. Sie kann Effektivwerte zwischen 150 Volt und 500 Volt aufweisen. Die erfindungsgemäße elektronische Schaltung ist derart ausgeführt, dass sie über einen solch weiten Bereich von Eingangsspannungen betreibbar ist.

In Figur 2 ist die Spannungsversorgung A gezeigt, die zur Versorgung eines Schaltungsblockes dient, der derart ausgeführt ist, dass er eine Spannungserfassung B und Vergleicher für die Spannungen umfasst. Dabei wird die Spannung zwischen Mittelabgriff der Spule und Endabgriff tiefpassgefiltert und vergleichen mit einem Spannungswert, der durch Gleichrichtung, Glättung und nachfolgender Spannungsteilung der einphasigen Versorgungswechselspannung zwischen L1, L2 entsteht. Dabei ist die Spannungsteilung derart bemessen, dass Referenzwerte vorgesehen sind. Liegt die an dem Mittelabgriff erfasste und danach geglättete Spannung nicht im zulässigen Bereich der Referenzwerte liefert der Vergleicher ein Signal, das zur Anzeige einer Fehlerinformation, insbesondere mittels der Anzeigemittel C führt. Das Signal wird auch einem Verzögerungs- und Ansteuerschaltungsteil D zugeführt, das nach einer zeitlichen Verzögerung den Trennschalter F ansteuert zum Abtrennen der Versorgung des Gleichrichters, was dann zum Abfallen der Bremse führt. Der Schalter E wird ebenfalls angesteuert und ist derart aufgebaut, dass er mechanisch bistabil ist. Dies bedeutet, dass er zwar von einem Signal der Ansteuerschaltung D auslösbar nicht, aber danach nicht wieder zurückstellbar ist mittels eines elektrischen Signals sondern nur durch Betätigen eines mechanischen Elementes. Der Schalter E ist sozusagen elektrisch monostabil und mechanisch bistabil. Zusätzlich ist der Schalter mit mechanischer Betätigung in den anderen Zustand bringbar.

Es hat sich herausgestellt, dass alle wesentlichen Fehlerquellen erfassbar sind, wenn auch nur die Spannung zwischen dem Mittelabgriff ws und dem Endabgriff rt der Figur 2 erfasst und ausgewertet wird, wie oben beschrieben. Denn sobald die Abgriffe, umfassend Endabgriffe (rt, bl) und Mittelabgriff ws der Spule vertauscht oder nicht angeschlossen werden, ändert sich die Spannung zwischen den Abgriffen rt und ws derart, dass sie aus dem durch die geeignet wählbaren Referenzwerte definierten zulässigen Bereich austritt.

Der Trennschalter F ist vorteiligerweise als Halbleiterschalter ausführbar, beispielsweise als Thyristor.

In einem weiteren erfindungsgemäßen Ausführungsbeispiel werden von dem Schaltungsblock B für Spannungserfassung und -Vergleich die Potentiale an allen Abgriffen erfasst und mit Referenzwerten verglichen. Davon abhängig wird dann das Signal erzeugt. Auf diese Weise ist eine absolute Kontrolle ausführbar.

In einem weiteren erfindungsgemäßen Ausführungsbeispiel wird das vom Vergleicher erzeugte Signal nicht nur mittels anzeigemittel optisch und/oder akustisch angezeigt, sondern mittels einer Datenbusleitung an weitere Busteilnehmer und/oder einen zentralen Rechner übermittelt. Dort werden dann entsprechend geeignete Maßnahmen eingeleitet, wie beispielsweise ein Stoppen von Antrieben in der zugehörigen Anlage oder ein Auslösen einer Reparaturvorgangs für den Gleichrichter der Bremse.

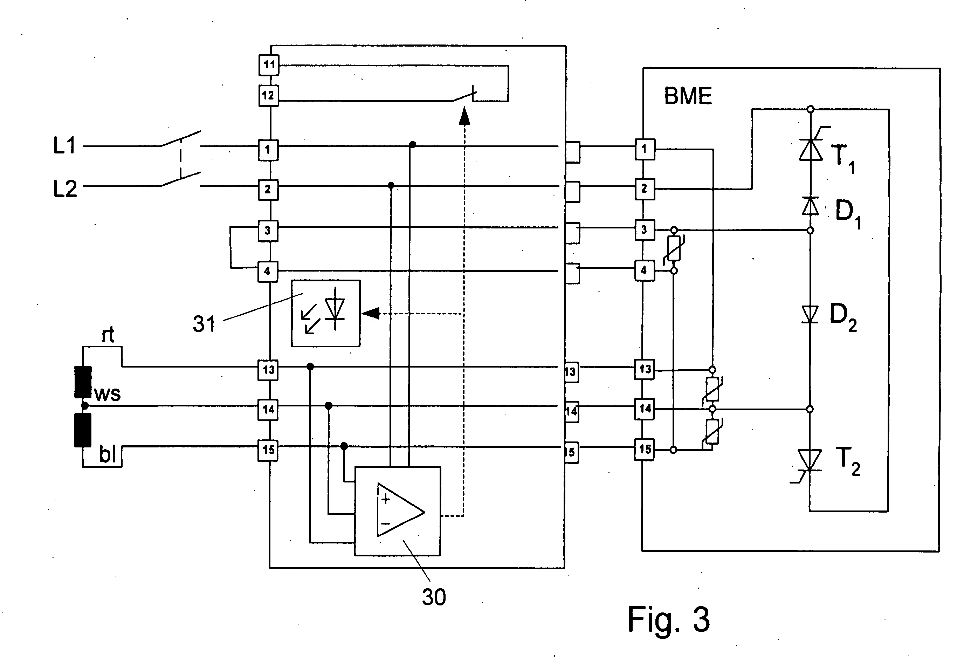

In Figur 3 ist ein weiteres erfindungsgemäßes Ausführungsbeispiel gezeigt, bei dem auch der zugehörige Gleichrichter BME gezeigt ist. An den Klemmen L1 und L2 wird die einphasige Wechselspannung angelegt, wie auch bei Figur 2. Der Gleichrichter BME weist nicht nur Dioden D1 und D2 zur Gleichrichtung auf sondern auch Thyristoren T1 und T2. zu Beginn der Bestromung der Spule wird für eine Zeitdauer von einigen Netzperioden der Thyristor T2 leitend. Dadurch wird der erste Teil der Spulenwicklung rt-ws, also am Mittelabgriff, bestromt. Danach wird der Thyristor T2 gesperrt und der Thyristor T1 leitend geschaltet. Somit fließt dann ein Haltestrom durch die gesamte Spulenwicklung rt-bl, wobei die Gleichrichtung mittels der Diode D1 und auch des Thyristors T1 ausgeführt ist. D2 ist als Freilaufdiode wirksam. Die an den Kontakten 3 und 4 der elektronischen Schaltung der Figur 3 vorhandene Brücke ist auch zum gleichstromseitigen Abschalten der Spannungsversorgung für die Spule verwendbar, wodurch ein schnelleres Abschalten der Spule ausführbar ist als wenn die einphasige Wechselspannung L1 und L2 abgeschaltet wird.

In der elektronischen Schaltung der Figur 3 ist die Spannungserfassung B mit der Erfassung aller Potentiale der Anschlüsse 13,14,15 ausgeführt. Somit ist der Vergleicher 30 derart ausgeführt, dass er alle Spannungen vergleichen kann und somit eine absolute Kontrolle ausführen kann. Bei Auftreten eines Fehlers wird nicht nur ein Signal für Anzeigemittel 31 erzeugt sondern auch ein Kontakt zwischen den Anschlüssen 11,12 geöffnet, um eine Weitermeldung des Fehlerzustandes an weitere elektronische Geräte zu ermöglichen.

In einem weiteren erfindungsgemäßen Ausführungsbeispiel wird nicht nur ein Anzeigemittel zum optischen Anzeigen des Fehlerzustandes, wie beispielsweise eine LED vorgesehen, sondern auch ein Meldekontakt und zusätzlich ein Mittel zum Abschalten des Gleichrichters mittels eines IGBT oder anderen elektronischen Halbleiterschalters.

In einem weiteren erfindungsgemäßen Ausführungsbeispiel wird nur ein Mittel zum Abschalten des Gleichrichters vorgesehen, aber kein Anzeigemittel. Dies ist vorteilhaft, wenn die erfindungsgemäße elektronische Schaltung im Inneren eines Gehäuses vorgesehen ist. Somit muss keine Ausnehmung im Gehäuse zum Durchleiten von Licht vorgesehen werden. Dadurch ist ein stabiles Ausführen des Gehäuses ermöglicht.

Der Spannungsteiler ist in einfacher Weise mittels einer Reihenschaltung von Widerständen realisierbar, wobei die herabgeteilte Spannung an diesen abgreifbar ist.

## Patentansprüche

1. Überwachungsvorrichtung (1) zur Überwachung einer Bremsspule (rt,ws,bl) und eines Gleichrichters (BME),
wobei die Bremsspule (rt,ws,bl) mit Gleichspannung versorgt ist und in einer elektromagnetisch betätigbaren Bremse angeordnet ist,
wobei die Gleichspannung von dem Gleichrichter (BME) aus einer Wechselspannung (L1,L2) erzeugt ist,
wobei die Vorrichtung zumindest eine elektronische Schaltung umfasst,
wobei die elektronische Schaltung durch eine eigene Spannungsversorgung (A) aus der Wechselspannung versorgbar ist,
wobei die elektronische Schaltung Mittel zur Erfassung von mindestens einer an der Spule direkt anliegenden Spannung aufweist und zur Abgabe mindestens eines Spannungswertes vorgesehen ist,
wobei die elektronische Schaltung Mittel (B30) zum Vergleichen der erfassten Spannungswerte mit Referenzwerten aufweist,
wobei das Vergleichsergebnls das Ergebnis der Überwachung der Bremsspule darstellt, und Mittel (4,31,C) zur Abgabe eines entsprechenden Signals von der elektronischen Schaltung umfasst sind,
insbesondere als Anzeige einer Fehlerinformation und/oder Weiterverarbeitung außerhalb der Vorrichtung und/oder auf weiteren Komponenten der Vorrichtung, mit denen die Erzeugung der Gleichspannung unterbindbar ist.

2. Vorrichtung nach Anspruch 1,
**dadurch gekennzeichnet, dass**
die erfasste, an der Spule anliegende Spannung zwischen einem Mittelabgriff der Spule und einem Endabgriff der Spule vorgesehen ist.

3. Vorrichtung nach Anspruch 1,
**dadurch gekennzeichnet, dass**
eine erste erfasste, an der Spule anliegende Spannung zwischen einem Mittelabgriff der Spule und einem Endabgriff der Spule vorgesehen ist und
eine zweite erfasste, an der Spule anliegende Spannung zwischen einem Mittelabgriff der Spule und dem anderen Endabgriff der Spule vorgesehen ist.

4. Vorrichtung nach mindestens einem der vorangegangenen Ansprüche,
**dadurch gekennzeichnet, dass**
die Spannungswerte vor dem Vergleichen Mitteln zur Filterung und nachfolgender Glättung zugeführt werden.

5. Vorrichtung nach mindestens einem der vorangegangenen Ansprüche,
**dadurch gekennzeichnet, dass**
die Wechselspannung einphasig oder mehrphasig ist.

6. Vorrichtung nach mindestens einem der vorangegangenen Ansprüche,
**dadurch gekennzeichnet, dass**
die Bremsspulenwicklung einen Mittelabgriff aufweist, insbesondere zum Erreichen eines beschleunigten Einfallens der Bremse.

7. Vorrichtung nach mindestens einem der vorangegangenen Ansprüche,
**dadurch gekennzeichnet, dass** die Referenzwerte mittels Spannungsteilung der Wechselspannung und nachfolgender Glättung der gleichgerichteten Spannung erzeugt sind.

8. Vorrichtung nach mindestens einem der vorangegangenen Ansprüche,
**dadurch gekennzeichnet, dass**
die Mittel zum Vergleichen ein Signal erzeugen, das Anzeigemitteln, einem Kontakt, einem Datenbus und/oder einem mechanisch bistabilen Schalter zuführbar ist.

9. Vorrichtung nach mindestens einem der vorangegangenen Ansprüche,
**dadurch gekennzeichnet, dass**
die Mittel zum Vergleichen ein Signal erzeugen, das einem Trennschalter zum Trennen der Spannungsversorgung des Gleichrichters zuführbar ist.

10. Vorrichtung nach mindestens einem der vorangegangenen Ansprüche,
**dadurch gekennzeichnet, dass**
der Gleichrichter steuerbare Halbleiterschalter, insbesondere Thyristoren, umfasst, welche derart ansteuerbar sind, dass beim Einschalten des Gleichrichters in einer ersten Zeitspanne ein erster Wicklungsabschnitt der Bremsspulenwicklung bestrombar ist und danach die gesamte Bremsspulenwicklung bestrombar ist.

11. Vorrichtung nach mindestens einem der vorangegangenen Ansprüche,
**dadurch gekennzeichnet, dass** die elektronische Schaltung an einem weiten Bereich von Eingangsspannungen betreibbar ist, insbesondere an Wechselspannungen mit einem Effektivwert zwischen 150 Volt und 500 Volt.

12. Vorrichtung nach mindestens einem der vorangegangenen Ansprüche
**dadurch gekennzeichnet, dass**
die elektronische Schaltung im Gehäuse des Gleichrichters integriert ausgeführt ist.

13. Vorrichtung nach mindestens einem der Ansprüche 1-11,
**dadurch gekennzeichnet, dass**
die elektronische Schaltung im Anschlusskasten eines Elektromotors vorgesehen ist, insbesondere eines Elektromotor mit Bremse.

14. Vorrichtung nach mindestens einem der Ansprüche 1-11,
**dadurch gekennzeichnet, dass**
die elektronische Schaltung in einer Ausnehmung des Gehäuses des Anschlusskastens eines Elektromotors einschraubbar und/oder vorgesehen ist, insbesondere eines Elektromotors mit Bremse.

15. Vorrichtung nach mindestens einem der Ansprüche 1-11,
**dadurch gekennzeichnet, dass**
die elektronische Schaltung in einem Schaltschrank einer Anlage vorgesehen ist.

16. Vorrichtung nach mindestens einem der Ansprüche 1 - 10,
**dadurch gekennzeichnet, dass**
die elektronische Schaltung ein Gehäuse aufweist, mit dem Sie auf den Gleichrichter aufsteckbar oder zwischen den Gleichrichter und dessen zugehörigen Anschlussleitungen zwischensteckbar vorgesehen ist.

17. Vorrichtung nach mindestens einem der Ansprüche 1-10,
**dadurch gekennzeichnet, dass** die elektronische Schaltung ein Gehäuse aufweist und an den Gleichrichter derart andrückbar ist, dass mittels Kontaktstiften und/oder Prüfspitzen elektrischer Kontakt zu den elektrischen Anschlussvorrichtungen des Gleichrichters herstellbar ist zur Anschlussprüfung der Verdrahtung des Gleichrichters mit der Bremse und/oder zur Funktionsdiagnose des Gleichrichters.

18. Vorrichtung nach mindestens einem der Ansprüche 1-10.
**dadurch gekennzeichnet, dass**
die elektronische Schaltung ein Gehäuse mit derartig ausgeführten Steckverbinderteilen aufweist, dass der Gleichrichter auf das Gehäuse aufsteckbar und das Gehäuse auf einen im Schaltschrank vorgesehenen Gegensteckverbinder aufsteckbar ist.

19. Vorrichtung nach mindestens einem der Ansprüche 1-10,
**dadurch gekennzeichnet, dass**
die elektronische Schaltung ein Gehäuse mit derartig ausgeführten Steckverbinderteilen aufweist, dass der Gleichrichter auf das Gehäuse derart aufsteckbar und das Gehäuse auf einen im Schaltschrank vorgesehenen Gegensteckverbinder derart aufsteckbar ist, dass elektrische Leitungen des Gleichrichters durchgeschleift sind durch das Gehäuse zu dem Gegensteckverbinder.

20. Vorrichtung nach mindestens einem der Ansprüche 1-10,
**dadurch gekennzeichnet, dass**
die elektronische Schaltung
durchgeschleifte, den Gleichrichter mit Wechselspannung versorgende Leitungen und durchgeschleifte, die Bremsspule versorgende Leitungen
umfasst.

21. Elektromotor mit einer Vorrichtung nach mindestens einem der vorangegangenen Ansprüche,
**dadurch gekennzeichnet, dass**
der Elektromotor eine elektromagnetisch betätigbare Bremse umfasst, die aus dem Gleichrichter versorgt ist, der im Anschlusskasten des Elektromotors vorgesehen ist, wobei eine elektronische Schaltung zur Anschlussprüfung der Bremsspule und/oder Überwachung der Funktion des Gleichrichters vorgesehen ist.

22. Verfahren zur Prüfung und/oder Überwachung einer elektromagnetisch betätigbaren Bremse, deren Bremsspule mit Gleichspannung versorgt wird,
wobei die Gleichspannung von einem Gleichrichter erzeugt wird, der aus einer Wechselspannung versorgt wird,
wobei mindestens eine an der Spule anliegende Spannung erfasst und mit Referenzwerten vergleichen wird,
wobei das Vergleichsergebnis das Ergebnis der Überwachung der Bremsspule darstellt,
insbesondere wobei das Ergebnis des Vergleichens nach außen oder an weitere Komponenten signalisiert wird.

## Claims

1. A monitoring device (1) for monitoring a brake coil (rt, ws, bl) and a rectifier (BME),
wherein the brake coil (rt, ws, bl) is supplied with d.c. voltage and is arranged in an electromagnetically operated brake,
wherein the d.c. voltage is generated from an a.c. voltage (L1, L2) by the rectifier (BME),
wherein the device comprises at least one electronic circuit,
wherein the electronic circuit can be provided with its own voltage supply (A) from the a.c. voltage,
wherein the electronic circuit has means for detecting at least one voltage applied directly to the coil and is provided for emitting at least one voltage value,
wherein the electronic circuit has means (B, 30) for comparing the detected voltage values with reference values,
wherein the comparison result represents the result of monitoring the brake coil, and means (4, 31, C) for emitting a corresponding signal are comprised by the electronic circuit,
in particular as an indicator of error information and/or further processing outside the device and/or on further components of the device, with which components the generation of the d.c. voltage can be prevented.

2. A device according to claim 1, **characterised in that** the detected voltage applied to the coil is provided between a centre tap of the coil and an end tap of the coil.

3. A device according to claim 1, **characterised in that** a first detected voltage applied to the coil is provided between a centre tap of the coil and an end tap of the coil, and a second detected voltage applied to the coil is provided between a centre tap of the coil and the other end tap of the coil.

4. A device according to at least one of the preceding claims, **characterised in that** before comparison the voltage values are fed to means for filtering and subsequent smoothing.

5. A device according to at least one of the preceding claims, **characterised in that** the a.c. voltage is single-phase or multiphase.

6. A device according to at least one of the preceding claims, **characterised in that** the brake-coil winding has a centre tap, in particular for achieving accelerated application of the brake.

7. A device according to at least one of the preceding claims, **characterised in that** the reference values are generated by means of division of the a.c. voltage and subsequent smoothing of the rectified voltage.

8. A device according to at least one of the preceding claims, **characterised in that** the comparison means generate a signal which is feedable to indicating means, a contact, a data bus and/or a mechanically bistable switch.

9. A device according to at least one of the preceding claims, **characterised in that** the comparison means generate a signal which is feedable to a disconnecting switch for disconnecting the voltage supply of the rectifier.

10. A device according to at least one of the preceding claims, **characterised in that** the rectifier comprises controllable semiconductor switches, in particular thyristors, which are activatable in such a way that, when the rectifier is switched on within a first time period, a current can pass through a first winding portion of the brake-coil winding and thereafter a current can pass through the entire brake-coil winding.

11. A device according to at least one of the preceding claims, **characterised in that** the electronic circuit can be operated on a wide range of input voltages, in particular a.c. voltages with an effective value between 150 volts and 500 volts.

12. A device according to at least one of the preceding claims, **characterised in that** the electronic circuit is integrated into the housing of the rectifier.

13. A device according to at least one of claims 1-11, **characterised in that** the electronic circuit is provided in the connection box of an electric motor, in particular an electric motor with a brake.

14. A device according to at least one of claims 1-11, **characterised in that** the electronic circuit can be screwed into and/or is provided in a recess of the housing of the connection box of an electric motor, in particular an electric motor with a brake.

15. A device according to at least one of claims 1-11, **characterised in that** the electronic circuit is provided in a switch cabinet of an installation.

16. A device according to at least one of claims 1-10, **characterised in that** the electronic circuit has a housing, by means of which it can be plugged onto the rectifier or plugged between the rectifier and its associated connecting lines.

17. A device according to at least one of claims 1-10, **characterised in that** the electronic circuit has a housing and can be pushed onto the rectifier in such a way that, by means of contact pins and/or test tips, electrical contact can be established with the electrical connecting devices of the rectifier in order to check the connection of the wiring of the rectifier to the brake and/or to diagnose the function of the rectifier.

18. A device according to at least one of claims 1-10, **characterised in that** the electronic circuit has a housing with connector parts constructed in such a way that the rectifier can be plugged onto the housing, and the housing can be plugged onto a mating connector provided in the switch cabinet.

19. A device according to at least one of claims 1-10, **characterised in that** the electronic circuit has a housing with connector parts constructed in such a way that the rectifier can be plugged onto the housing, and the housing can be plugged onto a mating connector provided in the switch cabinet in such a way that electric lines of the rectifier are fed through the housing to the mating connector.

20. A device according to at least one of claims 1-10, **characterised in that** the electronic circuit comprises feed-through lines supplying the rectifier with a.c. voltage and feed-through lines supplying the brake coil.

21. An electric motor with a device according to at least one of the preceding claims, **characterised in that** the electric motor comprises an electromagnetically operated brake which is supplied by the rectifier, which is provided in the connection box of the electric motor, wherein an electronic circuit is provided for checking the connection of the brake coil and/or for monitoring the function of the rectifier.

22. A method of testing and/or monitoring an electromagnetically operated brake, the brake coil of which is supplied with d.c. voltage,
wherein the d.c. voltage is generated by a rectifier which is supplied with an a.c. voltage,
wherein at least one voltage applied to the coil is detected and compared with reference values,
wherein the comparison result represents the result of monitoring the brake coil,
in particular wherein the comparison result is signalled outwards or to further components.

## Revendications

1. Dispositif de surveillance (1) pour surveiller une bobine de frein (rt, ws, bl) d'un redresseur (BME),
dans lequel la bobine de frein (rt, ws, bl) est alimentée en tension continue et disposée dans un frein à commande électromagnétique,
dans lequel la tension continue est générée par le redresseur (BME) à partir d'une tension alternative (L1, L2),
dans lequel le dispositif comprend au moins un circuit électronique,
dans lequel le circuit électronique peut être alimenté par une alimentation électrique séparée (A) à partir de la tension alternative,
dans lequel le circuit électronique présente des moyens pour saisir au moins une tension présente directement à la bobine et est prévu pour délivrer au moins une valeur de tension,
dans lequel le circuit électronique présente des moyens (B, 30) pour comparer les valeurs de tension saisies avec des valeurs de référence,
dans lequel le résultat de la comparaison représente le résultat de la surveillance de la bobine de frein et le circuit électronique comprend des moyens (4, 31, C) pour délivrer un signal correspondant,
en particulier pour l'affichage d'une information d'erreur et/ou un traitement ultérieur à l'extérieur du dispositif et/ou dans d'autres composants du dispositif, par lesquels la génération de tension continue peut être empêchée.

2. Dispositif selon la revendication 1,
**caractérisé en ce**
**que** la tension saisie, présente à la bobine, est prévue entre une prise médiane de la bobine et une prise d'extrémité de la bobine.

3. Dispositif selon la revendication 1,
**caractérisé en ce**
**qu'**une première tension saisie, présente à la bobine, est prévue entre une prise médiane de la bobine et une prise d'extrémité de la bobine et
**qu'**une deuxième tension saisie, présente à la bobine, est prévue entre une prise médiane de la bobine et l'autre prise d'extrémité de la bobine.

4. Dispositif selon au moins l'une des revendications précédentes,
**caractérisé en ce**
**qu'**avant la comparaison, les valeurs de tension sont amenées à des moyens de filtrage et de lissage consécutif.

5. Dispositif selon au moins l'une des revendications précédentes,
**caractérisé en ce**
**que** la tension alternative est monophasée ou polyphasée.

6. Dispositif selon au moins l'une des revendications précédentes,
**caractérisé en ce**
**que** l'enroulement de bobine de frein présente une prise médiane, en particulier pour obtenir une intervention accélérée du frein.

7. Dispositif selon au moins l'une des revendications précédentes,
**caractérisé en ce**
**que** les valeurs de référence sont générées par division de tension de la tension alternative et lissage consécutif de la tension redressée.

8. Dispositif selon au moins l'une des revendications précédentes,
**caractérisé en ce**
**que** les moyens de comparaison génèrent un signal qui peut être amené à des moyens d'affichage, à un contact, à un bus de données et/ou à un commutateur bistable mécaniquement.

9. Dispositif selon au moins l'une des revendications précédentes,
**caractérisé en ce**
**que** les moyens de comparaison génèrent un signal qui peut être amené à un sectionneur pour couper l'alimentation électrique du redresseur.

10. Dispositif selon au moins l'une des revendications précédentes,
**caractérisé en ce**
**que** le redresseur comprend des semi-conducteurs pouvant être commandés, en particulier des thyristors, lesquels peuvent être commandés de manière que, lors de l'activation du redresseur, dans un premier intervalle de temps une première section d'enroulement de l'enroulement de bobine de frein puisse être alimentée et qu'ensuite tout l'enroulement de bobine de frein puisse être alimenté.

11. Dispositif selon au moins l'une des revendications précédentes,
**caractérisé en ce**
**que** le circuit électronique peut fonctionner sur une large plage de tensions d'entrée, en particulier sur des tensions alternatives d'une valeur efficace comprise entre 150 volts et 500 volts.

12. Dispositif selon au moins l'une des revendications précédentes,
**caractérisé en ce**
**que** le circuit électronique est intégré dans le boîtier du redresseur.

13. Dispositif selon au moins l'une des revendications 1 à 11,
**caractérisé en ce**
**que** le circuit électronique est prévu dans le coffret de raccordement d'un moteur électrique, en particulier d'un moteur électrique avec frein.

14. Dispositif selon au moins l'une des revendications 1 à 11,
**caractérisé en ce**
**que** le circuit électronique peut être vissé et/ou est prévu dans un évidement du boîtier du coffret de raccordement d'un moteur électrique, en particulier d'un moteur électrique avec frein.

15. Dispositif selon au moins l'une des revendications 1 à 11,
**caractérisé en ce**
**que** le circuit électronique est prévu dans une armoire de distribution d'une installation.

16. Dispositif selon au moins l'une des revendications 1 à 10,
**caractérisé en ce**
**que** le circuit électronique présente un boîtier avec lequel il peut être enfiché sur le redresseur ou est prévu pour pouvoir être intercalé entre le redresseur et ses lignes de raccordement associées.

17. Dispositif selon au moins l'une des revendications 1 à 10,
**caractérisé en ce**
**que** le circuit électronique présente un boîtier et peut être pressé sur le redresseur de manière qu'un contact électrique avec les dispositifs de raccordement électrique du redresseur puisse être établi au moyen de broches de contact et/ou de pointes de touche afin de contrôler le raccordement du câblage du redresseur avec le frein et/ou pour un diagnostic de fonctionnement du redresseur.

18. Dispositif selon au moins l'une des revendications 1 à 10,
**caractérisé en ce**
**que** le circuit électronique présente un boîtier avec des pièces de connecteur réalisées de manière que le redresseur puisse être enfiché sur le boîtier et que le boîtier puisse être enfiché sur un connecteur complémentaire prévu dans l'armoire de distribution.

19. Dispositif selon au moins l'une des revendications 1 à 10,
**caractérisé en ce**
**que** le circuit électronique présente un boîtier avec des pièces de connecteur réalisées de manière que le redresseur puisse être enfiché sur le boîtier et que le boîtier puisse être enfiché sur un connecteur complémentaire prévu dans l'armoire de distribution de manière que des lignes électriques du redresseur soient repiquées vers le connecteur complémentaire à travers le boîtier.

20. Dispositif selon au moins l'une des revendications 1 à 10,
**caractérisé en ce**
**que** le circuit électronique présente des lignes repiquées qui alimentent le redresseur en tension alternative et des lignes repiquées qui alimentent la bobine de frein.

21. Moteur électrique pourvu d'un dispositif selon au moins l'une des revendications précédentes,
**caractérisé en ce**
**que** le moteur électrique comprend un frein à commande électromagnétique qui est alimenté à partir du redresseur qui est prévu dans le coffret de raccordement du moteur électrique, un circuit électronique servant à contrôler le raccordement de la bobine de frein et/ou à surveiller le fonctionnement du redresseur étant prévu.

22. Procédé pour contrôler et/ou surveiller un frein à commande électromagnétique dont la bobine de frein est alimentée en tension continue,
dans lequel la tension continue est générée par un redresseur qui est alimenté à partir d'une tension alternative,
dans lequel au moins une tension présente à la bobine est saisie et comparée avec des valeurs de référence,
dans lequel le résultat de la comparaison représente le résultat de la surveillance de la bobine de frein,
en particulier dans lequel le résultat de la comparaison est signalé vers l'extérieur ou à d'autres composants.
